# EUROPEAN PATENT APPLICATION

(11) **EP 4 674 640 A2**
(43) Date of publication of application: **07.01.2026**
(21) Application number: 25216998.2
(22) Date of filing: 25.08.2023
(51) Int. Cl.: B60C 5/14

(54) **PNEUMATIC TIRE**

(30) Priority: 21.09.2022 JP 2022150531
(62) Divisional of application: 23193465.4
(71) Applicant: Sumitomo Rubber Industries, Ltd., Kobe-shi, Hyogo 651-0072 (JP)
(72) Inventor: OKAGAWA, Hiroshi, Kobe-shi, Hyogo, 651-0072 (JP); MAEDA, Yohei, Kobe-shi, Hyogo, 651-0072 (JP); KIMOTO, Ryuhei, Kobe-shi, Hyogo, 651-0072 (JP)
(74) Representative: Manitz Finsterwald Patent- und Rechtsanwaltspartnerschaft mbB

(57) **Abstract**

A pneumatic tire of the present invention includes a tread portion, sidewall portions, bead portions, a carcass, and an inner liner layer. The carcass includes a plurality of carcass cords and a topping rubber layer. The inner liner layer includes a butyl rubber layer and an adhesive rubber layer. An electronic module is disposed between the carcass and the adhesive rubber layer. The electronic module includes an electronic component and a cover rubber. The cover rubber includes an inner layer and an outer layer. The electronic component is covered between the inner layer and the outer layer of the cover rubber.

## Description

### FIELD OF THE INVENTION

The present invention relates to a pneumatic tire.

### BACKGROUND OF THE INVENITON

WO 2021/106917 A1 discloses a pneumatic tire according to the preamble of claim 1. The tire has an inner liner layer arranged along a carcass layer on the inner surface of the tire. A transponder covered with a coating layer is embedded between the carcass layer and the inner liner layer. Other related tires are disclosed in US 2022/0088974 A1, US 2020/0108673 Al, and WO 2014/171164 Al.

JP 2020-152244 A has proposed a tire having an electronic component inside. In this tire, the electronic component is covered with a rubber composition which is specified. Specifically, in the aforementioned rubber composition, the content of carbon black to 100 mass parts of rubber component is from 10 to 50 mass parts. Further, a volume of the rubber composition is from 500 to 1000 mm³. Furthermore, the rubber composition has a dielectric constant of 7 or less at 915 MHz.

### SUMMARY OF THE INVENTION

The tire described above had room for improvement in terms of durability.

The present invention was made in view of the above, and a primary object thereof is to provide a pneumatic tire capable of exerting excellent durability.

The present invention is a pneumatic tire including the features of claim 1.

By adopting the above configuration, it is possible that the pneumatic tire of the present invention exerts excellent durability.

### BRIEF DESCRIPTION OF THE DRAWINGS

FIG. 1 is a lateral cross-sectional view of a pneumatic tire according to an embodiment of the present invention.
FIG. 2 is an enlarged cross-sectional view of a carcass and an inner liner layer.
FIG. 3 is an enlarged view of one of bead portions of FIG. 1.
FIG. 4 is an enlarged perspective view of an electronic module of FIG. 3.
FIG. 5 is an enlarged cross-sectional view of the carcass, the inner liner layer, and the electronic module of FIG. 3.

### DETAILED DESCRIPTION OF THE INVENTION

An embodiment of the present invention will now be described below in conjunction with accompanying drawings.

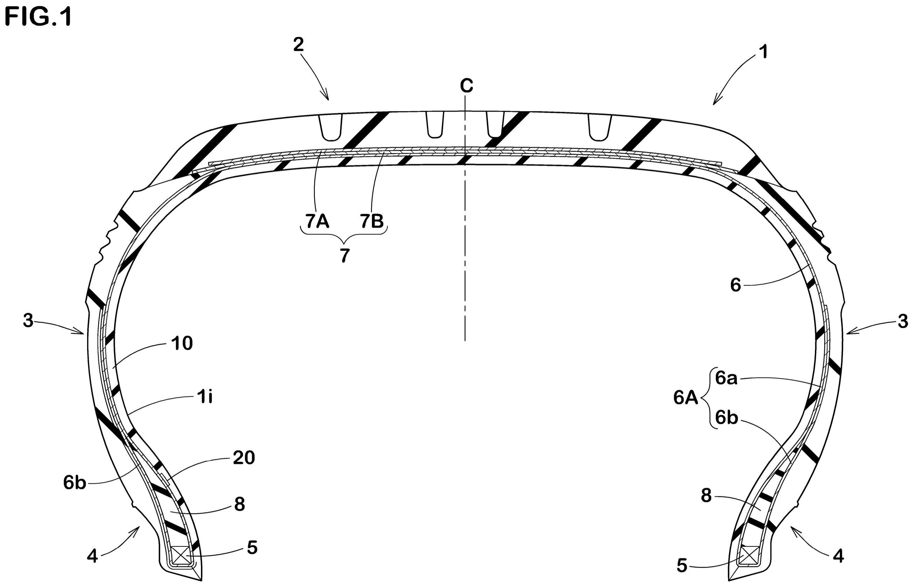

FIG. 1 is a lateral cross-sectional view of a pneumatic tire 1 (hereinafter, may be simply referred to as "tire 1") of the present embodiment in a standard state. It should be noted that FIG. 1 is a diagram showing a cross section of the tire 1 when the tire 1 extending in an annular shape is cut along a virtual plane that passes through a tire rotation axis and is perpendicular to a tire circumferential direction. The tire 1 of the present embodiment is suitably used for passenger cars, for example.

The term "standard state" refers to a state in which the tire is mounted on a standard rim, inflated to a standard inner pressure, and loaded with no tire load, in the case of pneumatic tires for which various standards have been established. In the case of tires for which various standards have not been established, the standard state means a state in which the tire is loaded with no tire load, which is a standard usage state according to the purpose of use of the tire. In the present specification, unless otherwise specified, the dimensions and the like of various parts of the tire are the values measured in the standard state.

The term "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The term "standard inner pressure" refers to air pressure specified for the concerned tire by a standard included in a standardization system on which the tire is based, for example, the maximum air pressure in JATMA, maximum value listed in the

### "TIRE LOAD LIMITS AT VARIOUS COLD INFLATION PRESSURES" table in TRA, and "INFLATION PRESSURE" in ETRTO.

As shown in FIG. 1, the tire 1 in the present embodiment includes a tread portion 2, a pair of sidewall portions 3, and a pair of bead portions 4. A bead core 5 is embedded in each of the bead portions 4. Further, the tire 1 includes a carcass 6 and an inner liner layer 10.

The carcass 6 extends from the bead core 5 of one of the bead portions 4 to the bead core 5 of the other one of the bead portions 4. The carcass 6 in the present embodiment consists of a single carcass ply 6A, for example. The carcass ply 6A includes a main body portion (6a) and turned-up portions (6b), for example. The main body portion (6a) extends from one bead portion 4 to the other bead portion 4, for example. Thereby, the main body portion (6a) extends from the tread portion 2 to at least the bead cores 5 of the bead portions 4 via the sidewall portions 3. The turned-up portions (6b) are continuous with the main body portion (6a) and each turned up around a respective one of the bead cores 5 from inside to outside in a tire axial direction. In each of the bead portions 4, a bead apex 8 extending outward in a tire radial direction from the bead core 5 is disposed between the main body portion (6a) and the turned-up portion (6b) to reinforce the bead portion 4 as appropriate.

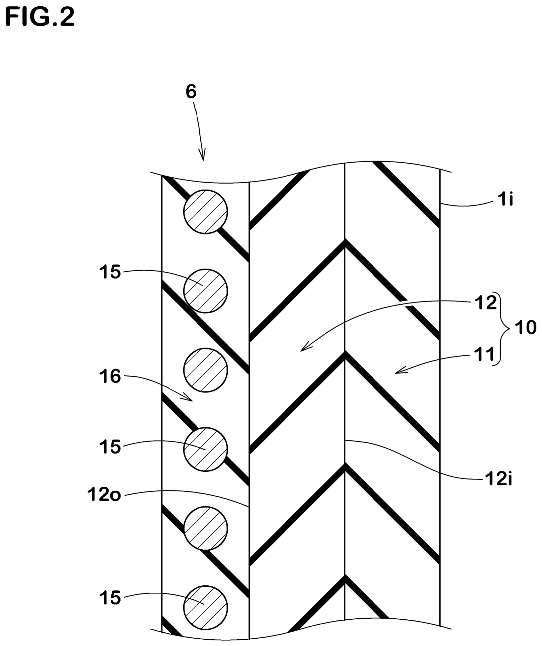

FIG. 2 is an enlarged cross-sectional view of the carcass 6 and the inner liner layer 10. FIG. 2 is a cross-sectional view of the carcass 6 and the inner liner layer 10 at a position avoiding an electronic module described below. Further, rubber members on the outer side of the tire from the carcass 6 are omitted in FIG. 2. As shown in FIG. 2, the carcass 6 includes a plurality of carcass cords 15 and a topping rubber layer 16 covering the carcass cords 15.

The carcass cords 15 are organic fiber cords such as aramid, rayon, and the like, for example. It is preferred that the carcass cords 15 are arranged at an angle from 70 to 90 degrees with respect to a tire equator (C), for example.

Examples of the rubber component of the topping rubber layer 16 of the carcass 6 include diene rubbers such as isoprene rubber, styrene-butadiene rubber (SBR), butadiene rubber (BR), acrylonitrile butadiene rubber (NBR), chloroprene rubber (CR), butyl rubber (IIR), styrene-isoprene-butadiene copolymerized rubber (SIBR), and the like. They may be used alone or in combination of two or more. Isoprene rubber, SBR, and BR are particularly preferred among them.

The inner liner layer 10 is arranged on an inner side of the carcass 6 to form a tire inner cavity surface (1i). The inner liner layer 10 includes a butyl rubber layer 11 and an adhesive rubber layer 12. It should be noted that the distinction between these layers is omitted in FIG. 1. As shown in FIG. 2, the butyl rubber layer 11 forms the tire inner cavity surface (1i). The butyl rubber layer 11 has an extremely low air permeability and is able to retain the tire internal pressure. The butyl rubber layer 11 contains 80% or more of butyl rubber or halogenated butyl rubber, for example.

The adhesive rubber layer 12 has an inner side surface (12i) in contact with the butyl rubber layer 11 and an outer side surface (12o) in contact with the carcass 6. The adhesive rubber layer 12 has better adhesive properties than the butyl rubber layer 11. As a result, the carcass 6 and the inner liner layer 10 are firmly adhered to each other, therefore, their peeling is suppressed. It is preferred that the adhesive rubber layer 12 is formed of an elastomer composition containing natural rubber or styrene butadiene rubber, for example.

The configurations of the carcass 6 and the inner liner layer 10 described above are examples, and known configurations can be applied to the carcass 6 and the inner liner layer 10 in the present invention.

As shown in FIG. 1, the tread portion 2 of the present embodiment has a belt layer 7 including belt cords made of metal, for example. The belt layer 7 includes two belt plies 7A and 7B, for example. Each of the two belt plies 7A and 7B has a plurality of belt cords arranged at an angle from 15 to 45 degrees with respect to the tire circumferential direction. The belt cords of one belt ply 7A and the belt cords of the other belt ply 7B are inclined to opposite sides to each other with respect to the tire circumferential direction. This effectively reinforces the tread portion 2.

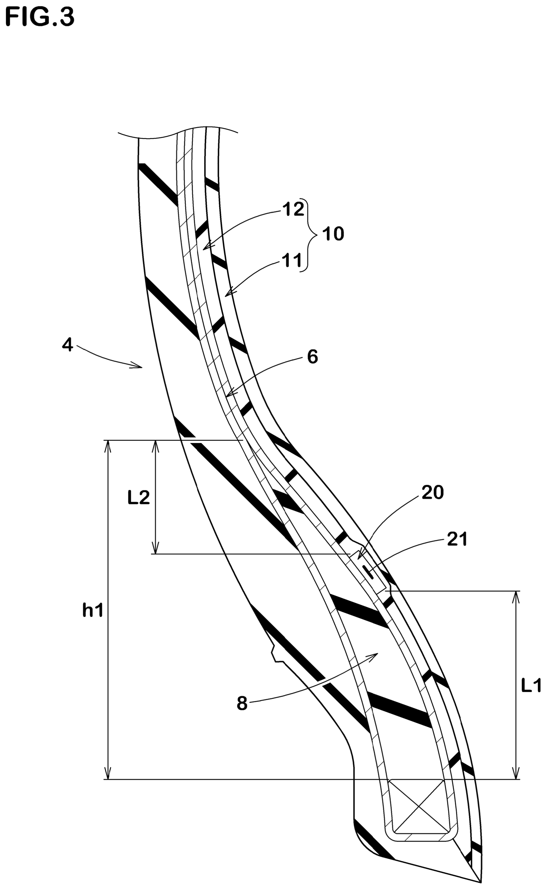

FIG. 3 shows an enlarged view of the bead portion 4 on the left side in FIG. 1. As shown in FIG. 3, in the present invention, at least one electronic module 20 is disposed between the carcass 6 and the adhesive rubber layer 12. In the present embodiment, the electronic module 20 is disposed in one of the bead portions 4, but it is not limited to this manner. For example, the electronic module 20 may be disposed in one of the sidewall portions 3 (shown in FIG. 1).

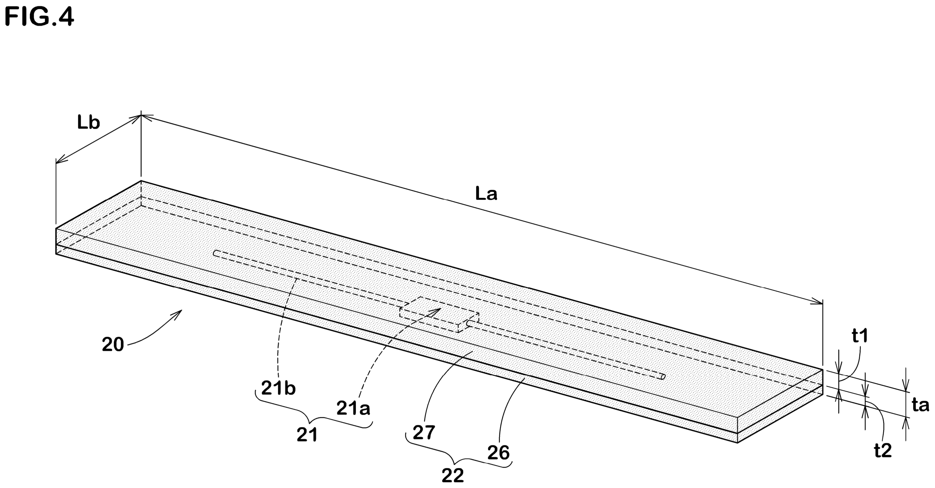

FIG. 4 shows an enlarged perspective view of the electronic module 20. The outer surface of the electronic module 20 in FIG. 4 is dotted. As shown in FIG. 4, the electronic module 20 includes an electronic component 21 and a cover rubber 22 covering the electronic component 21. Examples of the electronic component 21 are an RFID tag, a pressure sensor, a temperature sensor, an acceleration sensor, a magnetic sensor, and the like, for example. The electronic component 21 in the present embodiment is an RFID tag. An RFID tag is a small, lightweight electronic component consisting of a main body portion (21a), in which a transmitter/receiver circuit, a control circuit, a memory, and the like are embedded in a chip, and an antenna (21b). When the RFID tag receives a question radio wave, it uses it as electrical energy and transmits various data in its memory as a response radio wave. The RFID tag employs a known configuration and detailed description thereof is omitted in the present specification.

For the cover rubber 22, a known rubber having excellent adhesiveness can be used as appropriate. For the cover rubber 22, a rubber same as or similar to that of the topping rubber layer 16 of the carcass 6 described above may be employed.

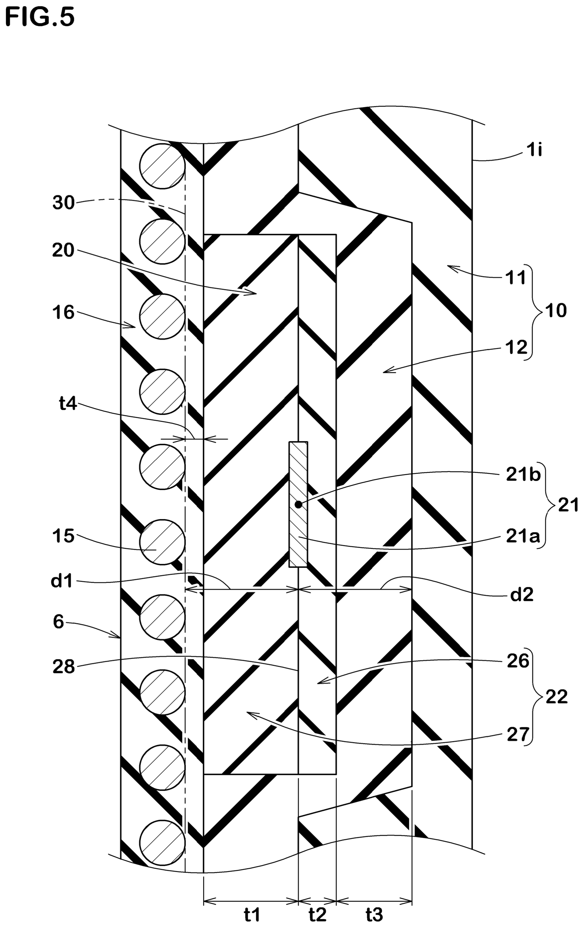

FIG. 5 shows an enlarged cross-sectional view of the carcass 6, the inner liner layer 10, and the electronic module 20. It should be noted that each layer has a constant thickness and the carcass cords 15 are evenly spaced in FIG. 5 for ease of understanding the invention, but the actual tire 1 can include deformations and distortions that are inevitable in rubber products.

The cover rubber 22 of the present invention includes an inner layer 26 in contact with the adhesive rubber layer 12 and an outer layer 27 in contact with the topping rubber layer 16 of the carcass 6. Further, in the present invention, the electronic component 21 is disposed between the inner layer 26 and the outer layer 27 of the cover rubber 22. The tire 1 of the present invention can demonstrate excellent durability by adopting the above configuration. The reasons for this are as follows.

In general, the carcass cords 15 and the butyl rubber layer 11 of the inner liner layer 10 are known to have low adhesion to other members. On the other hand, in a tire with the electronic component 21, when the electronic component 21 and the carcass cords 15 are in contact, or when the electronic component 21 and the butyl rubber layer 11 are in contact, these contact areas tend to be the starting point of separation and tend to impair durability.

In contrast, in the present invention, the cover rubber 22 covering the electronic component 21 includes the inner layer 26 in contact with the adhesive rubber layer 12 and the outer layer 27 in contact with the topping rubber layer 16 of the carcass 6 and the electronic component 21 is covered between the inner layer 26 and the outer layer 27. As a result, contact between the electronic component 21 and the carcass cords 15 or the butyl rubber layer 11 is suppressed, therefore, the separation described above can be prevented, thereby, the durability of the tire is improved.

A more detailed configuration of the present embodiment will be described below. It should be noted that the configuration described below represents a specific aspect of the present embodiment. Therefore, it goes without saying that the present invention can achieve the effects described above even if it does not have the configuration described below. Further, even if any one of the configurations described below is applied alone to the tire of the present invention having the features described above, an improvement in performance corresponding to the applied configuration can be expected. Furthermore, when some of the configurations described below are applied in combination, a combined improvement in performance according to the combination of the configurations can be expected.

As shown in FIG. 1, it is preferred that the electronic component 21 is arranged at a position spaced radially outward by a distance of 3 mm or more from a radially outer surface of the bead core 5. Further, it is preferred that the electronic component 21 is arranged radially inside the axially outermost end of the belt layer 7 by a distance of 3 mm or more. Therefore, the electronic component 21 is arranged away from the metal members contained in the bead core 5 and the belt layer 7, thereby, radio interference and other operational defects of the electronic components can be suppressed. It should be noted that the aforementioned distance is specified as the distance from the outermost surface of the bead core 5 or the outermost end of the belt layer 7 to the center of gravity of the electronic component 21 in a direction parallel to the tire radial direction.

As shown in FIG. 3, it is preferred that the electronic module 20 is arranged in one of the bead portions 4, and in the present embodiment, the electronic module 20 is arranged axially inside the bead apex 8. As a result, deformation around the electronic module 20 is suppressed by the bead apex 8, therefore, the durability of the tire is further improved.

From the point of view of obtaining the above-mentioned effects while maintaining a sufficient distance between the electronic component 21 and the bead core 5, it is preferred that a distance (L1) from the innermost end in the tire radial direction of the electronic module 20 to the outermost surface of the bead core 5 is from 50% to 60% of a height (h1) in the tire radial direction of the bead apex 8. Further, it is preferred that a distance (L2) from the outermost end in the tire radial direction of the electronic module 20 to the outermost end in the tire radial direction of the bead apex 8 is from 25% to 35% of the height (h1) of the bead apex 8.

More specifically, when the height (h1) of the bead apex 8 is 35 mm or more, it is preferred that the distance (L1) is 5 mm or more and the distance (L2) is 7 mm or more. On the other hand, when the height (h1) of the bead apex 8 is less than 35 mm, it may be difficult to sufficiently ensure both the distance (L1) and the distance (L2). For this reason, when the height (h1) is less than 35 mm, the distance (L1) is preferentially secured as 5 mm or more, and the distance (L2) may be less than 7 mm.

As shown in FIG. 4, the electronic component 21 included in the electronic module 20 has an overall length (which is the overall length including the antenna (21b)) of about 35 to 50 mm, for example. On the other hand, the cover rubber 22 has an overall length greater than the overall length of the electronic component 21 so that it can completely cover the electronic component 21. Specifically, the cover rubber 22 is configured in a laterally elongated and flat rectangular parallelepiped shape having a first length (La), a second length (Lb), and a thickness (ta). The first length (La) is the length in the tire circumferential direction, and is from 60 to 80 mm, for example. The second length (Lb) is a length in the direction orthogonal to the first length (La) and corresponds to the length along the carcass 6 of the electronic module 20 in the lateral cross-sectional view of the tire. The second length (Lb) is smaller than the first length (La), and is from 10 to 15 mm, for example. The thickness (ta) is the thickness in a direction orthogonal to the first length (La) and the second length (Lb). The thickness (ta) is smaller than the first length (la) and the second length (Lb), and is from 2.0 to 3.0 mm, preferably from 2.2 to 2.4 mm, for example.

As shown in FIG. 5, the cover rubber 22 has a boundary surface 28 between the inner layer 26 and the outer layer 27. The electronic module 20 of the present embodiment is arranged so as to ensure a first distance (d1), which is the shortest distance from the boundary surface 28 to a virtual carcass cord reference surface 30. The virtual carcass cord reference surface 30 means a virtual surface connecting the surfaces of the carcass cords 15, specifically, a flat plane or a smooth curved surface passing through on the tire inner cavity surface (1i) side ends of the carcass cords 15. In FIG. 5, the virtual carcass cord reference surface 30 is indicated by a two-dot chain line.

Further, the electronic module 20 of the present embodiment is arranged so as to ensure a second distance (d2), which is the shortest distance from the boundary surface 28 to the butyl rubber layer 11. The first distance (d1) is from 1.0 to 2.0 mm, for example. Further, the second distance (d2) is from 1.0 to 2.0 mm, for example. This reliably suppresses contact between the electronic component 21 and the carcass cords 15 or the butyl rubber layer 11.

A ratio (d1/d2) between the first distance (d1) and the second distance (d2) is preferably 0.50 or more, more preferably 0.85 or more, and preferably 1.50 or less, more preferably 1.15 or less. Therefore, the electronic component 21 is placed centrally between the multiple carcass cords 15 and the butyl rubber layer 11, and thereby, the durability of the tire is further improved.

In the cover rubber 22, the inner layer 26 has a maximum thickness (t2) smaller than a maximum thickness (t1) of the outer layer 27. Specifically, the maximum thickness (t2) of the inner layer 26 is from 40% to 60% of the maximum thickness (t1) of the outer layer 27. As a result, the overall thickness (ta) (shown in FIG. 4) of the electronic module 20 can be reduced, and thus an increase in tire weight and deterioration of uniformity can be suppressed.

It is preferred that the adhesive rubber layer 12 has a maximum thickness (t3) (which is the maximum thickness of the area in contact with the inner layer 26) is from 100% to 250% of the maximum thickness (t2) of the inner layer 26. Thereby, the inner liner layer 10 and the electronic module 20 are firmly adhered.

The topping rubber layer 16 has a maximum thickness (t4) (the maximum thickness from the virtual carcass cord reference surface 30 to the outer surface of the carcass 6 in the area in contact with the outer layer 27) smaller than the maximum thickness (t1) of the outer layer 27, for example. Specifically, the maximum thickness (t4) of the topping rubber layer 16 is from 10% to 30% of the maximum thickness (t1) of the outer layer 27. Therefore, the thickness of the carcass 6 can be reduced and the tire weight can be reduced.

While detailed description has been made of the tire according to an embodiment of the present invention, the present invention can be embodied in various forms without being limited to the illustrated embodiment.

### Examples

Pneumatic tires for passenger cars of size 285/65R17 having a basic structure shown in FIG. 1 were made by way of test according to the specification listed in Table 1. As Reference 1, tires were made by way of test in which the electronic module did not have the inner layer so that the electronic component is in direct contact with the adhesive rubber layer. As Reference 2, tires were made by way of test in which the electronic module did not have the outer layer so that the electronic component is in direct contact with the topping rubber layer of the carcass. References 1 and 2 are substantially the same as the tires in Examples except for the items noted above. Test tires were tested for durability. Common specifications and the test methods were as follows.
Tire rim: 17x8.0
Tire inner pressure: 250 kPa

### < Durability of Tire >

The test tires were each loaded with a constant longitudinal load (7.33 kN) and run for a distance of 20000 km at a speed of 120 km/h on a drum testing machine. The tires were then disassembled to check for presence or absence of damage around the electronic components and the degree of the damage. The degree of the damage was evaluated in the following three grades A to C.
A: the damage is a minor damage and continued use does not adversely affect the life of the tire or the operation of the electronic component.
B: the damage is greater than A but not likely to pose a practical problem for the tire.
C: the damage is greater than B and improvement is desirable.

The test results are shown in Table 1.

**Table 1**

| | | Ref. 1 | Ref. 2 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Maximum Thickness (t4) of Topping Rubber | [mm] | 0.2 | 0.2 | 0.2 | 0.2 | 0.2 | 0.2 | 0.2 | 0.2 | 0.3 | 0.4 | 0.2 |
| Maximum Thickness (t1) of Outer Layer | [mm] | 2.0 | 0 | 0.8 | 1.0 | 1.2 | 1.0 | 1.0 | 1.0 | 1.0 | 1.1 | 1.0 |
| Maximum Thickness (t2) of Inner Layer | [mm] | 0 | 2.0 | 0.8 | 1.0 | 1.2 | 1.0 | 0.4 | 0.8 | 0.3 | 0.3 | 0.5 |
| Maximum Thickness (t3) of Adhesive Rubber Layer | [mm] | 1.0 | 1.0 | 1.3 | 1.0 | 1.0 | 0.5 | 0.8 | 0.4 | 0.7 | 0.7 | 0.2 |
| First Distance (d1) | [mm] | 2.2 | 0.2 | 1.0 | 1.2 | 1.4 | 1.2 | 1.2 | 1.2 | 1.3 | 1.5 | 1.2 |
| Second Distance (d2) | [mm] | 1.0 | 3.0 | 2.1 | 2.0 | 2.2 | 1.5 | 1.2 | 1.2 | 1.0 | 1.0 | 0.7 |
| Ratio (d1/d2) | | 2.20 | 0.07 | 0.48 | 0.60 | 0.64 | 0.80 | 1.00 | 1.00 | 1.30 | 1.50 | 1.71 |
| Presence (P) or Absence (A) of Damage | | (P) | (P) | (P) | (A) | (A) | (A) | (A) | (A) | (A) | (A) | (P) |
| Degree of Damage | | C | C | A | - | - | - | - | - | - | - | A |

As shown in Table 1, it was confirmed that significant damages occurred in the tires in References 1 and 2, whereas no damages or just minor damages occurred in the tires in Examples.

### [Statement of Disclosure]

The present invention includes the following aspects.

### [Present Invention 1]

A pneumatic tire including:
a tread portion;
a pair of sidewall portions;
a pair of bead portions each having a bead core embedded therein;
a carcass extending between the bead cores of the pair of the bead portions;
an inner liner layer arranged on an inner side of the carcass, wherein
the carcass includes a plurality of carcass cords and a topping rubber layer covering the carcass cords,
the inner liner layer includes a butyl rubber layer and an adhesive rubber layer,
the butyl rubber layer forms a tire inner cavity surface,
the adhesive rubber layer has an inner side surface in contact with the butyl rubber layer and an outer side surface in contact with the carcass,
at least one electronic module is disposed between the carcass and the adhesive rubber layer,
the electronic module includes an electronic component and a cover rubber covering the electronic component,
the cover rubber includes an inner layer in contact with the adhesive rubber layer and an outer layer in contact with the topping rubber layer of the carcass, and
the electronic component is arranged between the inner layer and the outer layer of the cover rubber.

### [Present Invention 2]

The pneumatic tire according to Present Invention 1, wherein
the cover rubber has a boundary surface between the inner layer and the outer layer,
the boundary surface has a first distance (d1) and a second distance (d2),
the first distance (d1) is the shortest distance from the boundary surface to a virtual carcass cord reference surface,
the virtual carcass cord reference surface is a virtual surface connecting surfaces of the carcass cords,
the second distance (d2) is the shortest distance from the boundary surface to the butyl rubber layer, and
a ratio (d1/d2) between the first distance (d1) and the second distance (d2) is from 0.50 to 1.50.

### [Present Invention 3]

The pneumatic tire according to Present Invention 2, wherein the ratio (d1/d2) is from 0.85 to 1.15.

### [Present Invention 4]

The pneumatic tire according to Present Invention 2 or 3, wherein the first distance (d1) is from 1.0 to 2.0 mm.

### [Present Invention 5]

The pneumatic tire according to any of Present Inventions 2 to 4, wherein the second distance (d2) is from 1.0 to 2.0 mm.

### [Present Invention 6]

The pneumatic tire according to any of the preceding Present Inventions, wherein the electronic component is arranged at a position spaced outward in a tire radial direction by a distance of 3 mm or more from a radially outer surface of one of the bead cores.

### [Present Invention 7]

The pneumatic tire according to any of the preceding Present Inventions, wherein
the tread portion is provided with a belt layer including belt cords made of metal, and
the electronic component is arranged at a position spaced inward in a tire radial direction by a distance of 3 mm or more from one of outermost ends in a tire axial direction of the belt layer.

### [Present Invention 8]

The pneumatic tire according to any of the preceding Present Inventions, wherein the inner layer of the cover rubber has a maximum thickness smaller than a maximum thickness of the outer layer of the cover rubber.

### [Present Invention 9]

The pneumatic tire according to any of the preceding Present Inventions, wherein the inner layer of the cover rubber has a maximum thickness in a range from 40% to 60% of a maximum thickness of the outer layer of the cover rubber.

### [Present Invention 10]

The pneumatic tire according to any of the preceding Present Inventions, wherein the adhesive rubber layer has a maximum thickness in a range from 100% to 250% of a maximum thickness of the inner layer of the cover rubber.

### [Description of Reference Signs]

- 1i: tire inner cavity surface
- 2: tread portion
- 3: sidewall portion
- 4: bead portion
- 5: bead core
- 6: carcass
- 10: inner liner layer
- 11: butyl rubber layer
- 12: adhesive rubber layer
- 15: carcass cord
- 16: topping rubber layer
- 20: electronic module
- 21: electronic component
- 22: cover rubber
- 26: inner layer
- 27: outer layer

## Claims

1. A pneumatic tire (1) comprising:
a tread portion (2);
a pair of sidewall portions (3);
a pair of bead portions (4) each having a bead core (5) embedded therein;
a carcass (6) extending between the bead cores (5) of the pair of the bead portions (4);
an inner liner layer (10) arranged on an inner side of the carcass (6), wherein
the carcass (6) includes a plurality of carcass cords (15) and a topping rubber layer (16) covering the carcass cords (15),
**characterized in that** the inner liner layer (10) includes a butyl rubber layer (11) and an adhesive rubber layer (12),
the butyl rubber layer (11) forms a tire inner cavity surface,
the adhesive rubber layer (12) has an inner side surface (12i) in contact with the butyl rubber layer (11) and an outer side surface (12o) in contact with the carcass (6),
at least one electronic module (20) is disposed between the carcass (6) and the adhesive rubber layer (12),
the electronic module (20) includes an electronic component (21) and a cover rubber (22) covering the electronic component (21),
the cover rubber (22) includes an inner layer (26) in contact with the adhesive rubber layer (12) and an outer layer (27) in contact with the topping rubber layer (16) of the carcass (6),
the inner layer (26) of the cover rubber (22) has a maximum thickness (t2) smaller than a maximum thickness (t1) of the outer layer (27) of the cover rubber (22), and
the electronic component (21) is arranged between the inner layer (26) and the outer layer (27) of the cover rubber (22).

2. The pneumatic tire (1) according to claim 1, wherein
the cover rubber (22) has a boundary surface (28) between the inner layer (26) and the outer layer (27),
the boundary surface (28) has a first distance (d1) and a second distance (d2),
the first distance (d1) is the shortest distance from the boundary surface (28) to a virtual carcass cord reference surface (30),
the virtual carcass cord reference surface (30) is a virtual surface connecting surfaces of the carcass cords (15),
the second distance (d2) is the shortest distance from the boundary surface (28) to the butyl rubber layer (11), and
a ratio (d1/d2) between the first distance (d1) and the second distance (d2) is from 0.50 to 1.50.

3. The pneumatic tire (1) according to claim 2, wherein the ratio (d1/d2) is from 0.85 to 1.15.

4. The pneumatic tire (1) according to claim 2 or 3, wherein the first distance (d1) is from 1.0 to 2.0 mm.

5. The pneumatic tire (1) according to any of claims 2 to 4, wherein the second distance (d2) is from 1.0 to 2.0 mm.

6. The pneumatic tire (1) according to any of the preceding claims, wherein the electronic component (21) is arranged at a position spaced outward in a tire radial direction by a distance of 3 mm or more from a radially outer surface of one of the bead cores (5).

7. The pneumatic tire (1) according to any of the preceding claims, wherein
the tread portion (2) is provided with a belt layer (7) including belt cords made of metal, and
the electronic component (21) is arranged at a position spaced inward in a tire radial direction by a distance of 3 mm or more from one of outermost ends in a tire axial direction of the belt layer (7).

8. The pneumatic tire (1) according to any of the preceding claims, wherein the inner layer (26) of the cover rubber (22) has a maximum thickness (t2) in a range from 40% to 60% of a maximum thickness (t1) of the outer layer (27) of the cover rubber (22).

9. The pneumatic tire (1) according to any of the preceding claims, wherein the adhesive rubber layer (12) has a maximum thickness (t3) in a range from 100% to 250% of a maximum thickness (t2) of the inner layer (26) of the cover rubber (22).

10. The pneumatic tire (1) according to any of the preceding claims, wherein
the carcass (6) includes a main body portion (6a) and turned-up portions (6b),
the main body portion (6a) extends from one bead portion (4) to the other bead portion (4),
the turned-up portions (6b) are continuous with the main body portion (6a) and each turned up around a respective one of the bead cores (5) from inside to outside in a tire axial direction,
in each of the bead portions (4), a bead apex (8) extending outward in a tire radial direction from the bead core (5) is disposed between the main body portion (6a) and the turned-up portion (6b), and
the electronic module (20) is arranged axially inside the bead apex (8) in one of the bead portions (4).

11. The pneumatic tire (1) according to claim 10, wherein in the one of the bead portions (4), a distance (L1) from an innermost end in the tire radial direction of the electronic module (20) to an outermost surface in the tire radial direction of the bead core (5) is from 50% to 60% of a height (h1) in the tire radial direction of the bead apex (8).

12. The pneumatic tire according to claim 10 or 11, wherein in the one of the bead portions (4), a distance (L2) from an outermost end in the tire radial direction of the electronic module (20) to an outermost end in the tire radial direction of the bead apex (8) is from 25% to 35% of the height (h1) of the bead apex (8).

13. The pneumatic tire (1) according to any of the preceding claims, wherein
the topping rubber layer (16) has a maximum thickness (t4) smaller than a maximum thickness (t1) of the outer layer (27), and
the maximum thickness (t4) of the topping rubber is the maximum thickness from the virtual carcass cord reference surface (30) to an axially inner surface of the carcass (6) in an area thereof in contact with the outer layer (27) of the cover rubber (22).

14. The pneumatic tire (1) according to claim 13, wherein the maximum thickness (t4) of the topping rubber layer (16) is from 10% to 30% of the maximum thickness (t1) of the outer layer (27) of the cover rubber (22).
